# NEUE EUROPÄISCHE PATENTSCHRIFT

(11) **EP 1 376 156 B2**
(45) Veröffentlichungstag und Bekanntmachung des Hinweises auf die Entscheidung über den Einspruch: **23.03.2016**
(45) Hinweis auf die Patenterteilung: 12.07.2006
(21) Anmeldenummer: 03010255.2
(22) Anmeldetag: 07.05.2003
(51) Int. Cl.: G02B 1/04, G02B 6/02, G02B 6/036

(54) **Kunststoff-Lichtwellenleiter**
Plastic optical fiber
Fibre optique en matière synthéthique

(30) Priorität: 26.06.2002 DE 10228439
(43) Veröffentlichungstag der Anmeldung: 02.01.2004
(73) Patentinhaber: Evonik Degussa GmbH, 45128 Essen (DE)
(72) Erfinder: Beuth, Reinhard, 45772 Marl (DE); Schlobohm, Michael, Dr., 45721 Haltern am See (DE); Kannengiesser, Uwe, 47269 Duisburg (DE); Baumann, Franz-Erich, Dr., 48249 Dülmen (DE); Häger, Harald, Dr., 45665 Recklinghausen (DE)

(56) Entgegenhaltungen:
- WO-A-00/60382
- WO-A-99/12063
- US-A- 4 936 651

## Beschreibung

Die Erfindung betrifft eine optische Ader, die aus einem Faserkern, einem Fasermantel, einer darauf fest haftenden Polyamid-Schutzschicht und einer Außenschicht besteht.

Kunststoff-Lichtwellenleiter (im Folgenden kurz K-LWL gehannt) kommen im Bereich der Telekommunikation als störunanfälliges und einfach handhabbares optisches Übertragungselement überall dort zum Einsatz, wo der Abstand zwischen Sende- und Empfangseinheit nur wenige Meter bis maximal ca. 150 m beträgt. Auch in den Bereichen Verkehrstechnik/Fahrzeugbäu (Daten-und Signalübertragung in Kraftfahrzeugen, Flugzeugen, Schiffen usw.), Beleuchtung (Wechselverkehrszeichen), Automatisierungstechnik (Maschinensteuerung) und Sensorik gewinnen K-LWL zunehmend an Bedeutung (siehe etwa Draht 46 (1995) 4, Seiten 187-190).

Ein der Daten- oder Signalübertragung dienender K-LWL besteht aus einem häufig aus Polymethylmethacrylat (PMMA; Brechzahl η_{PMMA} = 1,49) gefertigten Faserkern und einem den Faserkern konzentrisch umhüllenden, auch als "Cladding" bezeichneten, ein- oder mehrschichtig aufgebauten Fasermantel. Als Mantelmaterial finden vorwiegend fluorhaltige Kunststoffe Verwendung, deren Brechzahl im Bereich zwischen 1,35 und 1,42 liegt. Die optische Dämpfung eines solchen K-LWL beträgt typischerweise 130-150 db/km (λ = 650 nm), der minimale Biegeradius etwa 5-10 mm.

Um den empfindlichen K-LWL vor mechanischen, thermischen und chemischen Einwirkungen zu schützen, wird er mit einem als Schutzhülle fungierenden Kunststoffmantel versehen, der gegebenenfalls auch mehrschichtig aufgebaut sein kann (WO 99/12063). Der mittels eines Extruders aufgebrachte Kunststoffmantel kann, je nach Verwendungszweck oder Einsatzgebiet, beispielsweise aus Polyethylen (PE), Polyvinylchlorid (PVC), Ethylenvinylacetat (EVA) oder Polyamid (PA) bestehen.

Im Bereich des Automobilbaus finden Polyamide als Schutzhüllenmaterial Verwendung, da sie die dortigen Anforderungen hinsichtlich der mechanischen Festigkeit (in erster Linie Zugfestigkeit und Querdruckfestigkeit), der maximalen Einsatztemperatur und der chemischen Beständigkeit erfüllen. Probleme bereitet allerdings die schlechte Haftung der Polyamid-Schutzhülle auf einem K-LWL, dessen Fasermaterial aus einem fluorhaltigen Polymer besteht. Der nur schwache Haftsitz der Schutzhülle wirkt sich insbesondere dann nachteilig aus, wenn die optische Ader (K-LWL plus Schutzhülle) in einer großen Temperaturschwankungen unterliegenden Umgebung, etwa der Fahrgastzelle eines Kraftfahrzeugs, verlegt ist und sich der K-LWL auf Grund seines unterschiedlichen Wärmedehnungsverhaltens und der nur schlechten Haftung des Polyamids auf dem Fluorpolymer relativ zur Schutzhülle bewegt. Dies hat zur Folge, dass sich beispielsweise der Abstand der Stirnfläche des K-LWL zu den Sende- und Empfangselementen (Leuchtdiode/PIN-Diode) unter Umständen so weit vergrößert, dass unzulässig hohe, gegebenenfalls zum Ausfall der Datenübertragungsstrecke führende Intensitätsverluste auftreten. Außerdem besteht die Gefahr der Beschädigung der Sende- oder Empfangselemente, falls der K-LWL zu weit aus der Schutzhülle herauswandert.

Um diesen als "Pistoning" des K-LWL bezeichneten Effekt zu unterdrücken, werden Stecker, Koppler oder Halterungen verwendet, die große Klemm- oder Crimpkräfte auf die Schutzhülle ausüben und so die Reibung zwischen Schutzhülle und K-LWL erhöhen. Die dadurch bedingte Deformation der Grenzschicht zwischen Faserkern und Fasermantel hat allerdings eine erhöhte Signaldämpfung zur Folge.

Das Abmanteln der Schutzschicht im Stecker verhindert zwar das "Pistoning", birgt allerdings die Gefahr, den Fasermantel während der Montage durch unsachgemäße Handhabung des mit einem Messerpaar ausgestatteten Absetzwerkzeugs zu beschädigen.

Die vom Stecker auf die optische Ader ausgeübten Klemm- oder Crimpkräfte lassen sich auch durch eine formschlüssige Verankerung des K-LWL in einer konusförmigen Bohrung des Steckergehäuses reduzieren. So wurde vorgeschlagen, die Stirnfläche des K-LWL mit Hilfe einer heißen Platte anzuschmelzen, den entstehenden Schmelzwulst in die sich nach innen verjüngende Steckerbohrung zu drücken und den K-LWL auf diese Weise fest im Steckergehäuse zu verankern. Im aufgeschmolzenen und damit deformierten Bereich weicht die Geometrie des K-LWL allerdings unter Umständen erheblich von der Totalreflexion ermöglichenden Zylindergeometrie ab, so dass im Steckergehäuse erhöhte Intensitätsverluste auftraten.

Eine Lösung für dieses Problem ist in der DE 199 14 743 A1 sowie der hierzu äquivalenten WO 00/60382 angegeben. Letztere offenbart eine optische Ader mit einem K-LWL, der einen Faserkern und einen ein- oder mehrschichtig aufgebauten Fasermantel aufweist, sowie mindestens eine den K-LWL umschließende Schutzhülle, wobei der Fasermantel oder zumindest seine äußere Schicht aus einem fluorhaltigen Kunststoff und die Schutzhülle aus Polyamiden oder Copolyamiden mit einem Schmelzpunkt von unter 220 °C besteht. Die Schutzhülle wird selbsthaftend auf dem Fasermantel aufgebracht, was dadurch erreicht wird, dass die Carboxylendgruppenkonzentration des Polyamids maximal 15 µÄq/g beträgt und die Aminoendgruppenkonzentration im Bereich zwischen 50 und 300 µÄq/g liegt. Die gemäß der WO 00/60382 eingesetzten Polyamide sind niedrigviskos, damit sie bei möglichst tiefer Schmelztemperatur auf den Fasermantel extrudiert werden können; die Extrusionstemperatur darf demgemäß nur etwa 185 - 200 °C betragen.

Die WO 00/60382 erwähnt die Möglichkeit, dem Schutzhüllenmaterial noch Füllstoffe wie etwa Ruß beizumischen oder die Schutzhülle mehrschichtig auszubilden, ohne dies näher zu konkretisieren.

Allerdings besitzen die in der WO 00/60382 offenbarten optischen Adern eine Reihe von Nachteilen:
- Bei den angegebenen Extrusionstemperaturen wird nicht in jedem Fall ein ausreichender Haftsitz erreicht;
- bei der Extrusion einer niedrigviskosen Polyamidschmelze erhält man keinen ausreichenden Schmelzedruck, um die benötigte Haftspannung zu erzielen;
- die vom Markt geforderte flammwidrige Ausrüstung lässt sich so im einschichtigen Mantel nicht ohne weiteres verwirklichen, da die üblicherweise verwendeten Flammschutzmittel die Haftung am Fasermantel beeinträchtigen und darüber hinaus durch die Migration des Flammschutzmittels oder durch die mechanische Einwirkung von Partikeln des Flammschutzmittels auf den Fasermantel die optische Dämpfung beeinflusst wird.

Von diesem Stand der Technik ausgehend stellte sich die Aufgabe, einen flammwidrig ausgerüsteten K-LWL bereitzustellen, bei dem ein ausgezeichneter Haftsitz der Schutzhülle am Fasermantel vorliegt und bei dem darüber hinaus die Schutzhülle eine gleichmäßige Dicke besitzt.

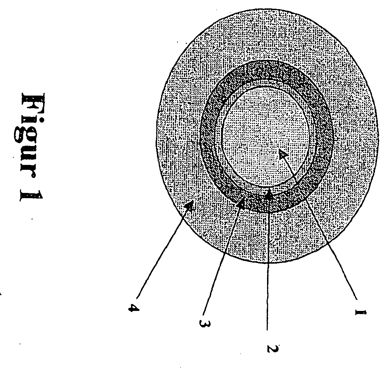

Diese Aufgabe wird, wie beispielhaft in der Fig. 1 dargestellt, durch eine optische Ader gelöst, die einen Faserkern (**1**) und einen ein- oder mehrschichtigen Fasermantel (**2**) aufweist und zusätzlich mindestens folgende Schichten enthält:
- Eine innere Außenschicht (**3**), die auf dem Fasermantel fest haftet und aus einer Formmasse besteht, die ein Polyamid enthält und bevorzugt im wesentlichen aus Polyamid besteht, wobei
   a) das Polyamid ausgewählt ist aus der Gruppe PA 11, PA 12, PA 1012, PA 1212, einem Copolyamid basierend auf einem dieser Polyamide, das maximal 30 Mol-% Comonomere .enthält, sowie Mischungen hiervon;
   b) das Polyamid mindestens 50 µÄq/g Aminoendgruppen enthält und
   c) die Polyamid-Formmasse eine Ruhe-Scherviskosität, gemessen nach ASTM D 4440 bei 220 °C, im Bereich von 500 bis 6000 Pas, bevorzugt von 500 bis 3000 Pas, besonders bevorzugt von 600 bis 2000 Pas und insbesondere bevorzugt von 700 bis 1200 Pas besitzt;
- eine äußere Außenschicht (**4**), die auf der inneren Außenschicht mit einer Abzugskraft von maximal 30 N/30 mm haftet und aus einer Polyamid-Formmasse besteht, die folgende Komponenten enthält:
   a) 20 bis 95 Gew.-% eines Polyamids, ausgewählt aus der Gruppe PA 11, PA 12, PA 1012, PA 1212, einem Copolyamid basierend auf einem dieser Polyamide, das maximal 30 Mol-% Comonomere enthält, einem Polyetheramid basierend auf einem dieser Polyamide oder Copolyamide, sowie Mischungen hiervon,
   b) 5 bis 45 Gew.-% eines Flammschutzmittels,
   c) 0 bis 60 Gew.-% eines Schlagzähmodifikators,
   wobei die Prozentangaben auf die Summe von a), b) und c) bezogen sind.

Die in Figur 1 nur schematisch und nicht maßstabsgetreu im Querschnitt dargestellte optische Ader kommt insbesondere als Übertragungselement für die störungsfreie Übermittlung von Daten und Signalen innerhalb der Fahrgastzelle eines Kraftfahrzeugs zum Einsatz. Als lichtleitende Struktur enthält die Ader einen so genannten Stufenindexprofil-LWL, der im gezeigten Ausführungsbeispiel aus einem PMMA-Faserkern **1** mit einem Durchmesser im Bereich um 1000 µm und einem aus einem fluorhaltigen Polymer gefertigten, ein- oder mehrschichtig aufgebauten Fasermantel **2** besteht. Die optische Dämpfung des Faserkerns **1** beträgt typischerweise 70 - 100 db/km (λ = 570 nm) bzw. 125 - 150 db/km (λ = 650 nm).

Bei den als Mantelmaterial bzw. als Material für die äußere Mantelschicht verwendeten fluorhaltigen Polymeren kann es sich gemäß dem Stand der Technik um Homopolymere, Copolymere fluorhaltiger Monomere sowie Copolymere fluorhaltiger Monomere mit Acrylsäure oder Acrylaten sowie Mischungen solcher Polymere oder Copolymere handeln Als fluorhaltige Monomere kommen insbesondere Vinylidenfluorid, Tetrafluorethen, Hexafluorpropen, Methacrylsäuretetrafluorpropylester, Methacrylsäurepentafluorpropylester, Methacrylsäuretrifluorethylester, Methacrylsäureheptadecafluordecylester oder Mischungen hiervon in Betracht.

In einer möglichen Ausführungsform enthält das Mantelmaterial Polyvinylidenfluorid, gegebenenfalls in Mischung mit PMMA, einem Polyglutarimid (EP-A-0 637 511) oder einem Acrylatcopolymer (EP-A-0 673 762).

Die Außendurchmesser des Faserkerns **1** und des Fasermantels 2 entsprechen vorzugsweise der in der IEC 60793-2 spezifizierten Norm (Außendurchmesser des Mantels 1000 ± 60 µm; Kerndurchmesser typischerweise 10 - 20 µm kleiner; numerische Apertur 0,5 ± 0,15). Es ist aber auch möglich, die Außendurchmesser des Faserkerns **1** und des Fasermantels **2** entsprechend anderen Normwerten zu wählen (0̸_{Mantel} = 750 ± 45 µm bzw. 500 ± 30 µm) oder den Abmessungen der im freien Handel erhältlichen Stufenindexprofil-K-LWL (0̸_{Mantel} = 75 µm, 125 µm, 250 µm, 380 µm, 1500 µm, 2000 µm oder 3000 µm) anzupassen.

Die den K-LWL umhüllenden, durch Co- oder Tandemextrusion aufgebrachten Außenschichten **3** und **4** schützen den erfindungsgemäßen K-LWL (**1**, **2**) vor äußeren Einflüssen. Die innere Außenschicht 3 ist beispielsweise 200 bis 300 µm dick, während die äußere Außenschicht **4** beispielsweise eine Dicke von 300 bis 600 µm aufweist. In bevorzugten Ausführungsformen ist die Dicke der beiden Außenschichten so gewählt, dass der Außendurchmesser der Ader 2,2 ± 0,1 mm (bei 0̸_{Mantel} = 1000 µm oder 750 µm) bzw. 1,5 ± 0,1 mm (bei 0̸_{Mantel} = 500 µm) beträgt.

Die als innere Schutzhülle dienende und gut auf dem fluorhaltigen Polymer des Fasermantels **2** haftende Formmasse der inneren Außenschicht **3** enthält ein Polyamid, dessen Aminoendgruppenkonzentration in der Regel im Bereich von 50 bis 500 µÄq/g, bevorzugt im Bereich von 60 bis 300 µÄq/g und besonders bevorzugt im Bereich von 90 bis 250 µÄq/g liegt. Die Carboxylendgruppenkonzentration unterliegt keinen grundsätzlichen Beschränkungen; bevorzugt beträgt sie jedoch maximal 30 µÄq/g, besonders bevorzugt maximal 20 µÄq/g und insbesondere bevorzugt maximal 15 µÄq/g. Der Überschuss an Aminoendgruppen wird auf bekannte Weise durch Zusatz eines Mono- oder Diamins zu Beginn oder während der Polykondensation eingestellt, wobei das Mono- oder Diamin als Kettenregler einpolymerisiert wird. Als Kettenregler eignen sich hierbei alle Monoamine und Diamine mit vorzugsweise ausschließlich primären Aminogruppen, wie z. B. Hexylamin, Octylamin, Ethylhexylamin, Dodecylamin, Tridecylamin, Dibutylamin, Stearylamin, Triacetondiamin, 1,4-Diaminobutan, 1,6-Diaminohexan, Diaminocyclohexan, Trimethylhexamethylendiamin, 1,8-Diaminooctan, 1,10-Diaminodecan, 1,12-Diaminododecan, m-oderp-Xylylendiamin, Cyclohexyldimethylendiamin, Bis(p-aminocyclohexyl)methan, weitere aliphatische, cycloaliphatische oder aromatische Mono- oder Diamine, die 2 bis 44 C-Atome und insbesondere 6 bis 36 C-Atome enthalten, sowie Gemische dieser.Amine. Im Falle von PA 1012 bzw. PA 1212 wird hierfür besonders vorteilhaft ein stöchiometrischer Überschuss der polyamidbildenden Diaminkomponente eingesetzt.

Die erfindungsgemäß eingesetzten Polyamide sind Stand der Technik. PA 11 wird technisch durch Polykondensation von ω-Aminoundecansäure und PA 12 durch Polymerisation von Laurinlactam hergestellt, während PA 1012 durch Polykondensation einer äquimolaren Mischung von 1,10-Decandiamin und 1,12-Dodecandisäure und PA 1212 durch Polykondensation einer äquimolaren Mischung von 1,12-Dodecandiamin und 1,12-Dodecandisäure hergestellt werden. Es können auch Copolyamide eingesetzt werden, die auf einem dieser Polyamide basieren und maximal 30 Mol% Comonomere enthalten, wobei die Comonomeren ausgewählt sind aus Dicarbonsäuren mit 6 bis 36 C-Atomen, Diaminen mit 6 bis 36 C-Atomen, Aminocarbonsäuren mit 6 bis 12 C-Atomen und Lactamen mit 6 bis 12 C-Atomen.

Die Formmasse der inneren Außenschicht 3 kann neben dem Polyamid noch die üblichen Zusatzstoffe wie UV- und Hitzestabilisatoren, Kristallisationsbeschleuniger, Pigmente und Gleitmittel enthalten. In einer bevorzugten Ausführungsform ist sie schwarz eingefärbt, vorzugsweise durch Zusatz von Ruß, damit kein Fremdlicht in den Faserkern gelangt.

Damit einerseits bei der wegen der begrenzten Wärmeformbeständigkeit der PMMA-Seele erforderlichen, niedrigen Massetemperatur eine ausreichende Haftung erreicht wird, andererseits aber das Cladding bzw. die Seele nicht wegen des zu hohen Schmelzedrucks elliptisch deformiert wird, muss die Ruhe-Scherviskosität der Formmasse bei 220 °C, gemessen in einem mechanischen Spektrometer (Kegel-Platte) nach ASTM D 4440, im Bereich von 500 bis 6000, bevorzugt im Bereich von 500 bis 3000, besonders bevorzugt im Bereich von 600 bis 2000 und insbesondere bevorzugt im Bereich von 700 bis 1200 Pas liegen.

Das Polyamid der äußeren Außenschicht kann aus der gleichen Gruppe gewählt werden wie das Polyamid der inneren Außenschicht. Es kann darüber hinaus auch ein Polyetheramid auf Basis eines dieser Polyamide sein. Polyetheramide sind grundsätzlich bekannt, z. B. aus der DE-OS 30 06 961. Bei der Herstellung des Polyetheramids wird neben den polyamidbildenden Monomeren ein Polyetherdiamin verwendet, das beispielsweise durch Konversion des entsprechenden Polyetherdiols durch reduktive Aminierung oder Kopplung an Acrylnitril mit nachfolgender Hydrierung zugänglich ist (z. B. EP-A-0 434 244; EP-A-0 296 852). Das Polyetherdiamin besitzt in der Regel eine zahlenmittlere Molmasse von 230 bis 4000; sein Anteil am Polyetheramid beträgt bevorzugt 5 bis 50 Gew.-%.

Das in der Formmasse der äußeren Außenschicht gegebenenfalls enthaltene Flammschutzmittel kann jedes Flammschutzmittel sein, das üblicherweise für Polyamidformmassen verwendet wird, beispielsweise Polyhalogendiphenyl, Polyhalogendiphenylether, Polyhalogenphthalsäure und deren Derivate, Polyhalogenoligo- und -polycarbonate oder halogenierte Polystyrole, wobei die entsprechenden Bromverbindungen besonders wirksam sind; Melamincyanurat, Melaminphosphat, Melaminpyrophosphat, elementarer roter Phosphor; Organophosphorverbindungen wie Phosphonate, Phosphinate, Phosphinite; Phosphinoxide wie Triphenylphosphinoxid; Phosphine, Phosphite oder Phosphate wie Triphenylphosphat. Darüber hinaus sind als Flammschutzmittel auch solche Verbindungen geeignet, die Phosphor-Stickstoff-Bindungen enthalten, wie Phosphonnitrilchlorid, Phosphorsäureesteramide, Phosphorsäureamide, Phosphonsäureamide, Phosphinsäureamide, Tris(aziridinyl)-phosphinoxid oder Tetrakis(hydroxymethyl)phosphoniumchlorid.

Bei Verwendung eines halogenhaltigen Flammschutzmittels kann ein Synergist in Mengen, bezogen auf die Formmasse, bis zu 20 Gew.-%, vorzugsweise von 0,1 bis 15 Gew.-% mitverwendet werden. Als Beispiele dieser Synergisten seien Verbindungen des Cadmiums, Zinks, Aluminiums, Silbers, Eisens, Kupfers, Antimons, Zinns, Magnesiums, Mangans, Vanadiums, Bors und Aluminiums genannt. Besonders geeignete Verbindungen sind z. B. Oxide der genannten Metalle, ferner Carbonate oder Oxicarbonate, Hydroxide sowie Salze organischer oder anorganischer Säuren wie Acetate oder Phosphate bzw. Hydrogenphosphate und Sulfate.

Weitere geeignete Flammschutzmittel sind Oxidhydrate von Magnesium oder Aluminium.

Bevorzugt werden halogenfreie Flammschutzmittel eingesetzt.

Als Schlagzähmodifikator kann jeder üblicherweise in Polyamiden verwendete Typ eingesetzt werden. Beispielsweise kann der Schlagzähmodifikator aus folgenden Verbindungsklassen ausgewählt werden:
a) Ethylen/C₃- bis ₁₂-α-Olefin-Copolymere mit 20 bis 96 und bevorzugt 25 bis 85 Gew.-% Ethylenanteil. Als C₃- bis C₁₂-α-Olelin wird beispielsweise Propen, 1-Buten, 1-Penten, 1-Hexen, 1-Octen, 1-Decen oder 1-Dodecen eingesetzt. Typische Beispiele hierfür sind Ethylen-Propylen-Kautschuk sowie LLDPE.
b) Ethylen/C₃- bis C₁₂-α-Olefin/unkonjugiertes Dien-Terpolymere mit 20 bis 85, bevorzugt 25 bis 75 Gew.-% Ethylenanteil und bis maximal etwa 10 Gew.-% eines unkonjugierten Diens wie Bicyclo(2.2.1)heptadien, Hexadien-1.4, Dicyclopentadien oder insbesondere 5-Ethylidennorbornen. Als C₃- bis C₁₂-α-Olefin sind die gleichen Verbindungen geeignet, wie sie oben unter a) beschrieben sind. Die Herstellung dieser Terpolymere sowie der unter a) beschriebenen Copolymere mit Hilfe eines Ziegler-Natta-Katalysators ist Stand der Technik.
c) Ethylen/Acrylat-Copolymere mit 50 bis 94 Gew.-% Ethylen, 6 bis 50 Gew.-% eines Acryl- oder Methacrylsäureesters und 0 bis 44 Gew.-%, bevorzugt 0,1 bis 20 Gew.-% anderer Comonomere wie z. B. ein C₃- bis C₁₂-α-Olefin, wie es unter a) beschrieben ist, Styrol, eine ungesättigte Mono- oder Dicarbonsäure wie z. B. Acrylsäure, Methacrylsäure, Maleinsäure, Maleinsäuremonobutylester oder Itaconsäure, ein ungesättigtes Dicarbonsäureanhydrid wie z. B. Maleinsäureanhydrid oder Itaconsäureanhydrid, ein ungesättiges Oxazolin wie z. B. Vinyloxazolin oder Isopropenyloxazolin, ein ungesättigtes Epoxid wie z. B. Glycidylacrylat, Glycidylmethacrylat oder Allyloxiran, ferner ein ungesättiges Silan wie z. B. Vinyltrimethoxysilan, Vinyl-tris(2-methoxy-ethoxy)silan, 3-Methacryloxypropyltrimethoxysilan oder 3-Methacryloxypropyltriethoxysilan.
   Die Herstellung derartiger Ethylen/Acrylat-Copolymere durch radikalische Polymerisation ist Stand der Technik.
d) Styrol-Ethylen/Buten-Styrol-Blockcopolymere (SEBS), die durch Hydrierung von StyrolButadien-Styrol-Blockcopolymeren erhältlich sind.
e) Polyalkenylene, die durch ringöffnende bzw. ringerweiternde Polymerisation von Cycloalkenen hergestellt werden können [siehe K.J. Ivin, T. Saegusa, "Ring-opening Polymerisation", Vol. 1, Elsevier Appl. Sci. Publishers, London, insbesondere Seiten 121 bis 183 (1984)]. Hiervon werden Polyoctenylene bevorzugt (vgl. A. Dräxler, Kautschuk + Gummi, Kunststoff 1981, Seiten 185 bis 190).
f) LDPE (Hochdruck-Polyethylen).
g) Acrylnitril-Butadien-Styrol (ABS)-Copolymere mit mehr als 50 Gew.-% Butadienanteil.

Die im Schlagzähmodifikator bevorzugt enthaltenen funktionellen Gruppen können gemäß dem Stand der Technik durch ungesättigte Monomere eingebracht werden, die entweder in die Hauptkette einpolymerisiert oder auf die Hauptkette thermisch oder radikalisch aufgepfropft werden. Als funktionelle Gruppen, die eine Anbindung an das Polyamid ermöglichen, eignen sich insbesondere Carbonsäuregruppen, Säureanhydridgruppen, Imidgruppen, Epoxidgruppen, Oxazolingruppen oder Trialkoxysilangruppen. Im Handel ist eine Vielzahl entsprechender Produkte erhältlich.

Selbstverständlich können auch Mischungen verschiedener Schlagzähmodifikatoren eingesetzt werden.

Darüber hinaus kann die Formmasse der äußeren Außenschicht noch die üblichen Zusatzstoffe wie UV- und Hitzestabilisatoren, Kristallisationsbeschleuniger, Weichmacher, Gleitmittel, anorganische Füllstoffe oder Verstärkungsfasern enthalten.

In einer bevorzugten Ausführungsform enthält diese Formmasse ein Pigment, mit dem die Masse z. B. grün, gelb, blau, rot, weiß oder schwarz eingefärbt ist.

Die innere Außenschicht muss auf dem Fasermantel fest haften, wobei die Abzugskraft mindestens 50 N/ 30mm und bevorzugt mindestens 60 N/30mm betragen muss. Dies wird reproduzierbar dann erreicht, wenn die Formmasse der inneren Außenschicht mit einer Temperatur von 180 - 230 °C, gemessen an der Düse, auf den K-LWL extrudiert wird.

Im Gegensatz dazu darf die äußere Außenschicht auf der inneren Außenschicht nur gering haften, damit eine Abmantelung, z. B. im Bereich eines Steckers, leicht vorgenommen werden kann.

Die Abzugskraft darf maximal 30 N/30mm betragen, bevorzugt maximal 25 N/30mm und besonders bevorzugt maximal 20 N/30mm. Dies kann, unabhängig voneinander, beispielsweise durch folgende Maßnahmen erreicht werden:
1. Die beiden Formmassen sind miteinander wenig verträglich; beispielsweise ist die eine auf Basis von PA 11 und die andere auf Basis von PA 12 aufgebaut. Die Extrusionstemperatur für die Formmasse der äußeren Außenschicht liegt im Bereich von 150 - 230 °C, gemessen an der Düse.
2. Die beiden Formmassen sind miteinander gut verträglich; in diesem Fall muss die Formmasse der äußeren Außenschicht bei so niedriger Temperatur auf die innere Außenschicht extrudiert werden, dass diese nicht anschmilzt. Die zweckmäßige Extrusionstemperatur, gemessen an der Düse, liegt hier im Bereich von 150 - 200 °C und bevorzugt im Bereich von 160 - 190 °C.
3. Die Formmasse der äußeren Schicht wird mit einem Trennmittel ausgerüstet; hierbei kann jedes für Polyamide geeignete Trennmittel verwendet werden, beispielsweise Alkylstearate, Calciumstearat, Fettsäureamide, Montansäureester, Wachsoxidate oder Siloxancopolymere.

Um den Haftsitz der inneren Außenschicht **3** auf dem Fasermantel **2** bzw. der äußeren Außenschicht **4** auf der inneren Außenschicht **3** zu prüfen, wird folgende Testmethode angewandt:
- teilweises Absetzen der Schutzhülle einer ca. 500 mm langen Ader derart, dass die Länge der verbleibenden Schutzhülle ca. 30 mm beträgt;
- Durchführung des abgesetzten Teils der Ader durch die Bohrung einer Platte, wobei der Durchmesser der Bohrung etwas größer ist als der Außendurchmesser des Fasermantels bzw. der inneren Außenschicht;
- Einspannen des abgesetzten Endes der Ader in eine Zugprüfmaschine (Abzugsgeschwindigkeit: 10 mm/min) und
- Messung der Zugkraft, bei der sich die Schutzhülle löst.

Die Erfindung wird im Folgenden beispielhaft erläutert.

In allen Versuchen wurde eine optische Faser der Firma Nichimen (Typ 1000 B) verwendet, die aus einem PMMA-Kern sowie einem Cladding aus einer PTFE-Schicht und einer PVDF-Schicht besteht.

Die Lösungsviskosität ηᵣₑₗ der Polyamide wurde an einer 0,5-gew.-%igen Lösung in m-Kresol bei 20 °C gemessen. Die DSC-Schmelzpunkte wurden auf einem Perkin-Elmer DSC 7-Gerät bei 20 K/min Heizrate anhand der 2. Aufheizkurve bestimmt. COOH-Endgruppen wurden alkalimetrisch in heißem Benzylalkohol, NH₂-Endgruppen mit Perchlorsäure in m-Kresol bestimmt.

### 1. Extrusion der inneren Außenschicht 3 auf die Faser 1,2

Hierfür wurde eine Formmasse verwendet, die auf einem PA 12 mit ηᵣₑₗ = 1,85, 90 µÄq/g Aminoendgruppen und 10µÄq/g Säureendgruppen basierte, welches mit 0,3 Gew.-% Ruß schwarz eingefärbt war. Die Formmasse besaß eine Ruhe-Scherviskosität, gemessen nach ASTM D 4440 bei 220 °C, von 800 Pas. Diese Formmasse wurde mit einer Temperatur von 185 °C bei einer Liniengeschwindigkeit von 30 m/min auf die Faser extrudiert.

Die Abzugskraft der Schicht **3** von der Faser wurde mit 55 N/30 mm ermittelt.

### 2. Extrusion der äußeren Außenschicht 4 auf die innere Außenschicht 3

Die nachstehend beschriebenen Formmassen wurden bei einer Temperatur von 185 °C und einer Liniengeschwindigkeit von 30 m/min auf die innere Außenschicht extrudiert.

Die Abzugskraft der Schicht **4** von der Schicht **3** wurde in jedem Fall mit weniger als 30 N/30 mm ermittelt.

### Beispiel 1: Formmasse aus

a) 100 Gew.-Teilen eines Polyetheramids, gemäß dem Stand der Technik hergestellt aus 35,83 kg Laurinlactam, 6,45 kg Dodecandisäure und 57,82 kg JEFFAMINE® D 2000 (Polyetherdiamin; mittlere Molmasse 2000) mit folgenden Kennwerten:
   Schmelzpunkt (DSC): 153°C
   Relative Lösungsviskosität ηᵣₑₗ : 1,78
   PA12-Blocklänge entsprechend einer mittleren Molmasse von 1509 (aus dem Laurinlactam/Dodecandisäure-Verhältnis berechnet);
b) 20 Gew.-Teilen MELAPUR® 25, einem Melamincyanurat;
c) 0,5 Gew.-Teilen IRGANOX® 1010, einem Stabilisator.

Das Ergebnis der Prüfung ist in der Tabelle 1 wiedergegeben.

### Beispiel 2: Formmasse aus

a) 100 Gew.-Teilen eines Copolyamids aus 80 Mol-% Laurinlactam und 20 Mol-% Caprolactam; ηᵣₑₗ = 1,9;
b) 22,4 Gew.-Teilen MELAPUR® 25 (Melamincyanurat),
c) 0,5 Gew.-Teilen IRGANOX® 1098 (Stabilisator),
d) 0,2 Gew.-Teilen CEASIT® PC (Calciumstearat).

Siehe Tabelle 1.

### Beispiel 3: Formmasse aus

a) 58 Gew.-Teilen PA 12; ηᵣₑₗ = 1,9;
b) 40 Gew.-Teilen EXXELOR® VA1801 (mit Maleinsäureanhydrid gepfropfter EPM-Kautschuk);
c) 15 Gew.-Teilen ANTIBLAZE® 1045 (phosphorhaltiges Flammschutzmittel);
d) 0,04 Gew.-Teilen CEASIT® PC (Calciumstearat).

### Siehe Tabelle 1.

### Beispiel 4: Formmasse aus

a) 85 Gew.-Teilen PA12; ηᵣₑₗ = 1,6;
b) 15 Gew.-Teilen MELAPUR® 25 (Melamincyanurat),
c) 15 Gew.-Teilen Diphenylkresylphosphat;
d) 0,04 Gew.-Teilen CEASIT® PC (Calciumstearat).

### Siehe Tabelle 1.

### Vergleichsbeispiel 1

Auf die Faser wurde bei 185 °C und 30 m/min nur eine einzige Schicht eines schwarz eingefärbten PA 12 (ηᵣₑₗ = 1,66; Ruhescherviskosität 400 Pas; 40 µÄq/g Aminoendgruppen extrudiert. Am Produkt wurde ein Haftsitz von 25 N/ 30 mm ermittelt.

### Vergleichsbeispiel 2

Es wurde wie im Vergleichsbeispiel 1 gearbeitet, mit dem alleinigen Unterschied, dass die PA12-Formmasse 20 Gew.-% MELAPUR® 25 enthielt. Die Faser **1, 2** erwies sich als eingeschnürt; sie besaß dahernurschlechte optische Übertragungsqualitäten.

**Tabelle 1: Ergebnisse**

| **Beispiel** | **Flammtest ^{a)} [s]** | **Säurelagerung ^{b)} [d]** |
|---|---|---|
| 1 | 29 | 13 |
| 2 | 28 | 20 |
| 3 | 20 | 25 |
| 4 | 30 | 19 |
| a) Flammtest, durchgeführt nach Daimler Chrysler AG, Prüfrichtlinie für LWL-Meterware, Version 1.1, Punkt 2.5.1; angegeben ist die Zeit bis zum Verlöschen der Flamme | | |
| b) Säurelagerung gemäß obiger Prüfrichtlinie; angegeben ist die Zeit bis zum Verspröden der eingelegten Ader | | |

## Patentansprüche

1. Optische Ader mit einem einen Faserkern (**1**) und einen ein- oder mehrschichtig aufgebauten Fasermantel (**2**) aufweisenden Kunststoff-Lichtwellenleiter, die zusätzlich mindestens folgende Schichten enthält:
- Eine innere Außenschicht (**3**), die auf dem Fasermantel fest haftet und aus einer Formmasse besteht, die ein Polyamid enthält, wobei
a) das Polyamid ausgewählt ist aus der Gruppe PA 11, PA 12, PA 1012, PA 1212, einem Copolyamid basierend auf einem dieser Polyamide, das maximal 30 Mol-% Comonomere enthält, sowie Mischungen hiervon;
b) das Polyamid mindestens 50 µÄq/g Aminoendgruppen enthält und
c) die Polyamid-Formmasse eine Ruhe-Scherviskosität, gemessen nach ASTM D 4440 bei 220 °C, im Bereich von 500 bis 6000 Pas besitzt;
- eine äußere Außenschicht (**4**), die auf der inneren Außenschicht mit einer Abzugskraft von maximal 30 N/30 mm haftet und aus einer Polyamid-Formmasse besteht, die folgende Komponenten enthält:
a) 20 bis 95 Gew.-% eines Polyamids, ausgewählt aus der Gruppe PA 11, PA 12, PA 1012, PA 1212, einem Copolyamid basierend auf einem dieser Polyamide, das maximal 30 Mol-% Comonomere enthält, einem Polyetheramid basierend auf einem dieser Polyamide oder Copolyamide, sowie Mischungen hiervon,
b) 5 bis 45 Gew.-% eines Flammschutzmittels,
c) 0 bis 60 Gew.-% eines Schlagzähmodifikators,
wobei die Prozentangaben auf die Summe von a), b) und c) bezogen sind.

2. Optische Ader gemäß Anspruch 1,
**dadurch gekennzeichnet,**
**dass** die Polyamid-Formmasse der inneren Außenschicht **(3)** eine Ruhe-Scherviskosität im Bereich von 500 bis 3000 Pas besitzt.

3. Optische Ader gemäß Anspruch 1,
**dadurch gekennzeichnet,**
**dass** die Polyamid-Formmasse der inneren Außenschicht **(3)** eine Ruhe-Scherviskosität im Bereich von 600 bis 2000 Pas besitzt.

4. Optische Ader gemäß Anspruch 1,
**dadurch gekennzeichnet,**
**dass** die Polyamid-Formmasse der inneren Außenschicht **(3)** eine Ruhe-Scherviskosität im Bereich von 700 bis 1200 Pas besitzt.

5. Optische Ader gemäß einem der vorhergehenden Ansprüche,
**dadurch gekennzeichnet,**
**dass** der Faserkern (**1**) aus PMMA besteht.

6. Optische Ader gemäß einem der vorhergehenden Ansprüche,
**dadurch gekennzeichnet,**
**dass** der Fasermantel (**2**) Polyvinylidenfluorid enthält.

7. Optische Ader gemäß einem der vorhergehenden Ansprüche,
**dadurch gekennzeichnet,**
**dass** die Formmasse der inneren Außenschicht schwarz eingefärbt ist.

## Claims

1. An optical cable with a polymer optical conductor which has a fibre core **(1)** and has a single- or multilayer fibre cladding **(2)**, where the cable contains at least the following additional layers:
- an inner external layer **(3)**, which adheres firmly to the fibre cladding and is composed of a moulding composition which contains a polyamide,
a) the polyamide being selected from the group PA 11, PA 12, PA 1012, PA 1212, a copolyamide based on one of these polyamides and containing not more than 30 mol% of comonomers, and mixtures of these;
b) the polyamide containing at least 50 µeq/g of amino end groups, and
c) the polyamide moulding composition having a zero-shear viscosity in the range from 500 to 6000 Pas, measured to ASTM D4440 at 220°C;
- an outer external layer **(4)**, which adheres to the inner external layer with a peel force of not more than 30 N/30 mm and is composed of a polyamide moulding composition which contains the following components:
a) from 20 to 95% by weight of a polyamide selected from the group PA 11, PA 12, PA 1012, PA 1212, a copolyamide based on one of these polyamides and containing not more than 30 mol% of comonomers, a polyetheramide based on one of these polyamides or copoly-amides, and mixtures of these,
b) from 5 to 45% by weight of a flame retardant,
c) from 0 to 60% by weight of an impact modifier,
the percentages being based on the entirety of a), b), and c).

2. An optical cable according to claim 1,
**characterized in that**
the polyamide moulding composition of the inner external layer **(3)** has a zero-shear viscosity in the range from 500 to 3000 Pas.

3. An optical cable according to claim 1,
**characterized in that**
the polyamide moulding composition of the inner external layer **(3)** has a zero-shear viscosity in the range from 600 to 2000 Pas.

4. An optical cable according to claim 1,
**characterized in that**
the polyamide moulding composition of the inner external layer **(3)** has a zero-shear viscosity in the range from 700 to 1200 Pas.

5. An optical cable according to any one of the preceding claims,
**characterized in that**
the fibre core **(1)** is composed of PMMA.

6. An optical cable according to any one of the preceding claims,
**characterized in that**
the fibre cladding **(2)** contains polyvinylidene fluoride.

7. An optical cable according to any one of the preceding claims,
**characterized in that**
the moulding composition of the inner external layer has been coloured black.

## Revendications

1. Fil optique comportant un guide d'onde lumineuse en plastique, présentant un noyau de fibre (1) et une gaine de fibre à structure mono ou multicouche (2), et qui renferme en plus au moins les couches suivantes :
- une couche extérieure interne (3) qui adhère solidement à la gaine de fibre et constituée d'une masse moulée qui renferme un polyamide,
a) le polyamide étant choisi dans le groupe constitué de PA 11, PA 12, PA 1012, PA 1212, d'un copolyamide à base de l'un de ces polyamides renfermant au maximum 30 % en moles de comonomères, ainsi que des mélanges de ces substances ;
b) le polyamide renfermant au moins 50 µÄq/g de groupes terminaux amino et
c) la masse moulée polyamide possèdant une viscosité transversale au repos, mesurée d'après la norme ASTM D 4440 à 220°C, de l'ordre de 500 à 6000 Pas ;
- une couche extérieure externe (4) qui adhère sur la couche extérieure interne avec une force de retrait d'au maximum 30 N/30 mm et qui est constituée d'une masse moulée en polyamide qui renferme les composants suivants :
a) de 20 à 95 % en poids d'un polyamide, choisi dans le groupe constitué de PA 11, PA 12, PA 1012, PA 1212, d'un copolyamide à base de l'un de ces polyamides, qui renferme au maximum 30 % en moles de comonomères, d'un polyétheramide à base de l'un de ces polyamides ou copolyamides, ainsi que des mélanges de ces substances,
b) de 5 à 45 % en poids d'un agent pare-flammes,
c) de 0 à 60 % en poids d'un modificateur de la résilience, les pourcentages se rapportant au total de a), b) et c).

2. Fil optique selon la revendication 1,
**caractérisé en ce que**
la masse moulée en polyamide de la couche extérieure interne (3) a une viscosité transversale au repos de l'ordre de 500 à 3000 Pas.

3. Fil optique selon la revendication 1,
**caractérisé en ce que**
la masse moulée en polyamide de la couche extérieure interne (3) a une viscosité transversale au repos de l'ordre de 600 à 2000 Pas.

4. Fil optique selon la revendication 1,
**caractérisé en ce que**
la masse moulée en polyamide de la couche extérieure interne (3) a une viscosité transversale au repos de 700 à 1200 Pas.

5. Fil optique selon l'une quelconque des revendications précédentes,
**caractérisé en ce que**
le noyau de fibre (1) est en PMMA.

6. Fil optique selon l'une quelconque des revendications précédentes,
**caractérisé en ce que**
la gaine de fibre (2) contient du fluorure de polyvinylidène.

7. Fil optique selon l'une quelconque des revendications précédentes,
**caractérisé en ce que**
la masse moulée de la couche extérieure interne est colorée en noir.
